# EUROPEAN PATENT SPECIFICATION

(11) **EP 1 540 075 B1**
(45) Date of publication and mention of the grant of the patent: **08.08.2007**
(21) Application number: 03771095.1
(22) Date of filing: 22.07.2003
(51) Int. Cl.: D21C 5/02, D21H 17/13, D21H 17/59

(54) **METHOD OF DEINKING**
VERFAHREN ZUM DEINKEN
PROCEDE DE DESENCRAGE

(30) Priority: 24.07.2002 GB 0217197
(43) Date of publication of application: 15.06.2005
(73) Proprietor: Dow Corning Corporation, Midland, Michigan 48611 (US); Nopco Paper Technology Holding AS, 3036 Drammen (NO)
(72) Inventor: NELLESSEN, Bernhard, 41564 Kaarst (DE); NORTHFLEET, Christina, 1150 Brussels (BE)
(74) Representative: Williams, Paul Edwin
(86) International application number: PCT/EP2003/008166
(87) International publication number: WO 2004/011717

(56) References cited:
- EP-A- 0 745 648
- US-A- 5 624 569

## Description

The present invention relates to a method of deinking printed wastepaper.

Growing awareness of environmental damage caused by deforestation has seen an increase in the recycling of wastepaper in recent years. It has been recognised that the ability to recycle wastepaper is commercially advantageous and has a significant impact on the conservation of virgin fibre resources. However, technological advances in printing inks and print media present ever-growing challenges to recyclers.

Printing on paper is typically accomplished using one of two types of ink, namely, impact ink, which is physically pressed onto the paper, and non-impact ink, which is attracted to a charged image and is then transferred to the paper. Impact inks are typically wet inks, for example letterpress inks, offset litho inks, photogravure inks and flexographic inks. For example, letterpress inks are generally composed of carbon black pigment in a mineral oil vehicle and are used in, for example, newspaper printing. Offset litho inks tend to contain more pigment than letterpress inks and contain drying oils such as linseed or alkyl resins. Flexographic inks are used in similar processes to letterpress inks but are water-based and contain emulsified ink in an alkali soluble binder. Such inks may easily be dislodged, but may form extremely fine particles that are difficult to capture and remove.

Non-impact inks, e.g. toners, are generally dry, powdered inks and are used in laser printing, photocopying and facsimile machines and generally comprise thermoplastic resins and pigment.

The deinking of paper bearing these two different types of ink requires different deinking procedures and conditions. Conventionally, deinking of paper bearing non-impact ink merely requires pulping with a surfactant in neutral conditions, whereas paper bearing impact ink requires different conditions, such as treatment with alkali, silicate and peroxide, as well as a surfactant.

In conventional deinking methods, the wastepaper is disintegrated (pulped) by mechanical agitation in an aqueous medium to separate the ink and impurities from the paper fibre and disintegrate the ink into particles of approximately 0.1 to 1000 µm. A grey slurry is thus obtained in which the ink is present in a finely dispersed form. The impurities, for example, plastic, aluminium foil, stones, screws, staples, paper clips etc., are removed during a large number of screening steps.

Whilst ink detachment of non-impact, e.g. photocopy, paper can normally be achieved in neutral conditions, for other printed paper ink detachment is routinely accomplished at alkaline pH levels using alkali hydroxides, alkali silicates, oxidative-working bleaches and surfactants at temperatures between 30 and 50°C. Usually, anionic and nonionic tensides are used as surfactants, for example, soaps, ethoxylated fatty alcohols and/or ethoxylated alkyl phenols (see, for example, EP 0013758).

The ink particles are then removed from the fibre slurry by washing and/or flotation. Smaller ink particles are removed by washing, and larger ink particles and stickies (i.e. glue residues and adhesives) are removed by flotation. During flotation, air bubbles are blown into the pulp. The dispersed ink particles become attached to the air bubbles, which carry the ink particles to the surface. The resultant foam is then skimmed from the surface. Subsequent steps involve heating the pulp to evenly distribute stubborn ink particles and screening the pulp to separate the damaged, short or weak fibres. The remaining clean pulp is then pressed between rollers into sheets and dried.

Thus, efficient deinking demands both successful separation of the ink from the paper fibre and removal of the dispersed ink from the fibre slurry.

However, there are a number of disadvantages associated with traditional deinking methods. For example, the incomplete removal of ink particles from the fibre slurry can cause the resulting paper to have a grey hue, spotting, and a low degree of brightness. Brightness and colour are important quality criteria for many paper uses.

In addition, the alkaline conditions used in traditional deinking methods cause water-soluble and/or colloidal solids and finely dispersed solids to contaminate the process water, for example, fillers, fine fibres and stickies. If these contaminants are insufficiently removed during washing, they can be concentrated by subsequent washings and reintroduced to the paper fibre, causing a loss of brightness in the resultant paper. Effluent containing the aforementioned chemicals conventionally used in deinking methods is also environmentally undesirable.

The present invention seeks to provide a method of deinking wastepaper which can overcome disadvantages of conventional deinking methods.

According to the present invention there is provided a method of deinking printed paper, the method comprising pulping the paper to form an aqueous slurry, adding a deinking additive to the paper, and removing detached ink by flotation, wherein the additive comprises an organo-modified siloxane comprising units of the formula:

[R¹ ₐZ_{b}SiO_{(4-a-b)/2}]ₙ

in which each R¹ is independently selected from a hydrogen atom, an alkyl, aryl, alkenyl, aralkyl, alkaryl, alkoxy, alkanoyloxy, hydroxyl, ester or ether group;
each Z is independently selected from an alkyl group substituted with an amine, amide, carboxyl, ester, or epoxy group, or a group -R²-(OCₚH_{2P})_{q}(OCᵣH₂ᵣ)ₛ-R³;
n is an integer greater than 1;
a and b are independently 0, 1, 2 or 3;
R² is an alkylene group or a direct bond;
R³ is a group as defined for R¹ or Z above;
p and r are independently an integer from 1 to 6;
q and s are independently 0 or an integer such that 1 ≤ q + s ≥ 400;
and wherein each molecule of the organo-modified siloxane contains at least one group Z.

Z is preferably a group -R²-(OCₚH₂ₚ)_{q}(OCᵣH₂ᵣ)ₛ-R³, more preferably wherein p and/or r are independently 2, 3 or 4, i.e. a group comprising ethylene, propylene, and/or butylene oxide groups. Preferably, q and s are each independently integers from 10 to 30, more preferably 15 to 25 (for example 18). In a particularly preferred group Z, p is 2, r is 3, and q and s are both 18. R² may be an alkylene group, for example having from 1 to 6 carbon atoms (i.e. a methylene, ethylene, propylene, butylene, pentylene or hexylene group), or a direct bond. R³ may be a group as defined hereinabove for R¹ or Z, and is preferably a hydrogen atom or a hydroxyl group.

Additionally or alternatively, Z may be an alkyl group substituted with an amine, amide, carboxyl, ester, or epoxy group, for example an alkyl group having from 1 to 6 carbon atoms, i.e. a substituted methyl, ethyl, propyl, butyl, pentyl or hexyl group.

The siloxane may be linear or may comprise units in which a + b = 0 or 1, i.e. the siloxane may contain branching. When Z is a group -R²-(OCₚH₂ₚ)_{q}(OCᵣH₂ᵣ)ₛ-R³, R³ is preferably a hydroxyl or alkanoyloxy group.

Preferably, 2 to 20 mole percent of silicon atoms in the siloxane molecule are substituted by a group Z, more preferably 5 to 16 mole percent.

The siloxane preferably has a hydrophilic/lipophilic balance (HLB)in the range of 5.0 to 7.3.

The molecular weight of the siloxane is preferably in the range of 1,000 to 500,000, more preferably 10,000 to 100,000.

A particularly preferred siloxane for use in the present invention is a hydroxy-endcapped linear polydimethylsiloxane having an HLB of 5.9 to 6.3, in which 10 to 12 mole percent of silicon atoms are substituted by Z groups of the formula -R²-(OCₚH₂ₚ)_{q}(OCᵣH₂ᵣ)ₛ-R³, in which p is 2, r is 3 and q and s are both 18, R² is an alkylene group having from 1 to 6 carbon atoms or a direct bond, and R³ is a hydrogen atom or a hydroxyl, ester or ether group.

The additive used in the present invention may comprise further components, in addition to the organo-modified siloxane. For example, the additive may further comprise one or more components selected from a polydimethylsiloxane, an organic polyether, and a fatty acid. Suitable organic polyethers include those of the formula R⁴-(OCₚH₂ₚ)_{q}(OCᵣH₂ᵣ)ₛ-R⁵ in which R⁴ and R⁵ are selected from a hydrogen atom, hydroxyl, alkyl and alkoxy groups, and p, q, r and s are as defined hereinabove. Suitable fatty acids include saturated and unsaturated monobasic aliphatic carboxylic acids, for example having from 8 to 22 carbon atoms, such as lauric, myristic, palmitic, stearic, arachidic, behenic, lignoceric, palmitolic, oleic, linoleic, linolenic, and arachidonic acids.

The additive may be in the form of an emulsion, for example the organo-modified siloxane may be a gum based self-emulsifying siloxane.

In the method of the present invention, the additive may be added to the paper before, during or after pulping. The amount of additive to be added to the paper is preferably within the range 0.1 to 1 wt% of the paper, more preferably 0.1 to 0.5 wt%. The additive may, for example, be added to the paper neat, as an emulsion, or in solution, for example an aqueous solution.

The method of the present invention is preferably performed at substantially neutral pH, although the method may be performed under alkaline pH.

The pulping and ink removal steps of the present invention may be performed as is conventional, as will be familiar to a person skilled in the art and described hereinabove. For example, the paper may be pulped to form an aqueous slurry having a consistency of, for example, from 1 to 10% (for example, 1 to 5%) at a temperature of between 30 and 50°C, for example 35 to 45°C. Consistency is defined as wt% of pulp solids in the fibre suspension. Ink removal may be performed in a suitable flotation cell (for example, a Denver Lab flotation cell) at a suitable temperature, for example between 30 and 50°C (e.g. 35 to 45°C), and number of revolutions per minute, for example from 500 to 1000 rpm. An additional advantage associated with the method of the present invention is that when used to treat flexographic printed waste, the process water is relatively clear, whereas with known deinking methods it is generally black. Moveover, the present method produces pulp of improved brightness.

Embodiments of the present invention will now be described in detail.

### Example 1

### a) Pulping

To an aqueous suspension of 110g of air-dry wastepaper (50% newspaper and 50% magazine paper) having a consistency of 4% were added 440g of industrial water at 45°C in a mixing vessel. The suspended paper was kneaded for 15 minutes at 45°C.

### b) Ink removal

Water having a hardness of 16°dH was added to the pulp obtained in a) above to achieve a consistency of 1%. To the pulp varying amounts of a hydroxyl endcapped polydimethylsiloxane having approximately 11 mole % silicon atom substitution by - (OC₂H₄)₁₈(OC₃H₆)₁₈ side chains, an HLB of approximately 6.1 and a molecular weight of approximately 60,000 (referred to herein as Siloxane 1) was added as an aqueous solution. The pulp was floated for 8 minutes at 45°C in a Denver Lab Flotation Cell at 1000 rpm, after which the pulp was separated from the water, and formed into sheets between two filters of a sheet former with drying at 95°C for 10 minutes under vacuum.

By way of comparison, steps a) and b) above were repeated using a commercially available fatty acid based deinking preparation. The results are shown in Table 1 below. Whiteness was evaluated according to DIN 53145 Part 1.

**Table 1**

| **Additive** | **wt % of additive used** | **Paper** | **pH** | **Whiteness before flotation %** | **Whiteness after flotation %** | **Whiteness difference %** |
|---|---|---|---|---|---|---|
| Fatty acid | 0.4 | aged | 8.5 | 42.4 | 59.0 | 16.6 |
| Fatty acid | 0.4 | fresh | 7.2 | 43.6 | 51.3 | 7.7 |
| Siloxane 1 | 0.3 | aged | 8.5 | 46.6 | 61.9 | 15.3 |
| Siloxane 1 | 0.3 | fresh | 8.5 | 46.6 | 61.9 | 15.3 |
| Siloxane 1 | 0.3 | fresh | 7.2 | 46.5 | 59.1 | 12.6 |
| Siloxane 1 | 0.1 | fresh | 7.2 | 44.6 | 56.5 | 11.9 |
| Siloxane 1 | 0.3 | aged | 7.2 | 40.2 | 47.8 | 7.6 |

### Example 2

### a) Pulping

To an aqueous suspension of 110g of air-dry wastepaper (10% newspaper and 90% magazine paper) having a consistency of 20% were added 440ml of industrial water at 45°C in a mixing vessel. The suspended paper was kneaded for 15 minutes at 45°C.

### b) Ink removal

Water was added to the pulp obtained in a) above to achieve a consistency of 1.09%. To the pulp varying amounts of a hydroxyl endcapped siloxane as defined in Table 4 below were added as an aqueous solution. The pulp was floated for 8 minutes at 45°C in a Denver Lab Flotation Cell.

Steps a) and b) above were repeated using the siloxane used in Example 1 (Siloxane 1) and the siloxanes defined in Table 4 (Siloxanes 2 to 8) on fresh and aged wastepaper. Table 4 also contains viscosity data for each of the siloxanes. By way of comparison, the experiment was also carried out using the commercially available fatty acid based deinking preparation used in Example 1. The results are shown in Table 2 (fresh wastepaper) and Table 3 (aged wastepaper) below. Whiteness was evaluated according to DIN 53145 Part 1.

**Table 2**

| **Additive** | **wt % of additive used** | **pH** | **Whiteness before flotation %** | **Whiteness after flotation %** | **Whiteness difference %** |
|---|---|---|---|---|---|
| Fatty acid | 0.4 | 8.1 | 35.8 | 51.1 | 15.3 |
| Siloxane 1 | 0.3 | 7.5 | 39.4 | 56.5 | 17.1 |
| Siloxane 2 | 0.3 | 7.5 | 39.1 | 54.2 | 15.1 |
| Siloxane 3 | 0.3 | 7.5 | 40.2 | 55.0 | 14.8 |
| Siloxane 4 | 0.3 | 7.5 | 37.8 | 55.0 | 17.2 |
| Siloxane 5 | 0.3 | 7.5 | 39.0 | 52.6 | 13.6 |
| Siloxane 6 | 0.3 | 7.5 | 41.2 | 53.5 | 12.3 |
| Siloxane 7 | 0.3 | 7.5 | 39.5 | 57.1 | 17.6 |
| Siloxane 8 | 0.3 | 7.5 | 40.1 | 54.0 | 13.9 |

**Table 3**

| **Additive** | **wt % of additive used** | **pH** | **Whiteness before flotation %** | **Whiteness after flotation %** | **Whiteness difference %** |
|---|---|---|---|---|---|
| Fatty acid | 0.4 | 7.8 | 36.3 | 44.6 | 8.3 |
| Siloxane 1 | 0.3 | 7.3 | 37.0 | 47.8 | 10.8 |
| Siloxane 4 | 0.3 | 7.3 | 37.0 | 50.3 | 13.3 |
| Siloxane 7 | 0.3 | 7.3 | 37.5 | 48.0 | 10.5 |

**Table 4**

| **n (degree of polymerisation)** | **% Substituted Silicon atoms** | | |
|---|---|---|---|
| | **5** | **10** | **15** |
| 100 | Siloxane 2 | Siloxane 3 | Siloxane 4 |
| | 7,720 cP | 5,560 cP | 3,100 cP |
| 300 | Siloxane 5 | Siloxane 6 | Siloxane 7 |
| | 98,540 cSt | 6,060 cP | 5,090 cP |
| 500 | | | Siloxane 8 |
| | | | 6,830 cP |

### Example 3

### a) Pulping

To an aqueous suspension of 110g of air-dry wastepaper (100% newspaper) having a consistency of 20% were added 400ml of industrial water at 45°C in a mixing vessel. The suspended paper was kneaded for 15 minutes at 45°C.

### b) Ink removal

Water was added to the pulp obtained in a) above to achieve a consistency of 1.09%. To the pulp varying amounts of a hydroxyl endcapped siloxane as defined in Table 4 and Example 1 were added as an aqueous solution. The pulp was floated for 8 minutes at 45°C in a Denver Lab Flotation Cell.

Steps a) and b) above were repeated using the siloxane used in Example 1 (Siloxane 1) and two of the siloxanes defined in Table 4 (Siloxanes 4 and 7). By way of comparison, the experiment was also carried out using the commercially available fatty acid based deinking preparation used in Example 1. The results are shown in Table 5 below. Whiteness was evaluated according to DIN 53145 Part 1.

### Example 4

Steps a) and b) of Example 1 were repeated using the siloxane used in Example 1 (Siloxane 1), but were performed on 100% flexographic paper. In addition, 0.10 wt% sodium hydroxide and 1.20 wt% sodium silicate were added to the slurry.

By way of comparison, the experiment was also carried out using the commercially available fatty acid based deinking preparation used in Example 1. The results are shown in Table 6 below. The appearance of the filtration water was also recorded. Whiteness was evaluated according to DIN 53145 Part 1.

**Table 5**

| **Additive** | **wt % of additive used** | **pH** | **Whiteness before flotation %** | **Whiteness after flotation %** | **Whiteness difference %** |
|---|---|---|---|---|---|
| Fatty acid | 0.4 | 7.7 | 24.7 | 27.0 | 2.3 |
| Siloxane 1 | 0.3 | 7.3 | 26.5 | 33.0 | 6.5 |
| Siloxane 4 | 0.3 | 7.2 | 24.4 | 33.0 | 8.6 |
| Siloxane 7 | 0.3 | 7.3 | 26.0 | 35.0 | 9.0 |

**Table 6**

| **Additive** | **wt % of additive used** | **Whiteness before flotation %** | **Whiteness after flotation %** | **Whiteness difference %** | **Appearance of filtration water** |
|---|---|---|---|---|---|
| Fatty acid | 0.4 | 28.8 | 29.9 | 1.1 | Dark black |
| Siloxane 1 | 0.2 | 25.4 | 33.4 | 8.0 | Light grey |
| Siloxane 1 | 0.2 | 26.6 | 34.5 | 7.9 | Light grey |

## Claims

1. A method of deinking printed paper, the method comprising pulping the paper to form an aqueous slurry, adding a deinking additive to the paper, and removing detached ink by flotation, wherein the additive comprises an organo-modified siloxane comprising units of the formula:
[R¹ ₐZ_{b}SiO_{(4-a-b)/2}]ₙ
in which each R¹ is independently selected from a hydrogen atom, an alkyl, aryl, alkenyl, aralkyl, alkaryl, alkoxy, alkanoyloxy, hydroxyl, ester or ether group;
each Z is independently selected from an alkyl group substituted with an amine, amide, carboxyl, ester, or epoxy group, or a group -R²-(OCₚH₂ₚ)_{q}(OCᵣH₂ᵣ)ₛ-R³;
n is an integer greater than 1;
a and b are independently 0, 1, 2 or 3;
R² is an alkylene group or a direct bond;
R³ is a group as defined for R¹ or Z above;
p and r are independently an integer from 1 to 6;
q and s are independently 0 or an integer such that 1 ≤ q + s ≥ 400;
and wherein each molecule of the organo-modified siloxane contains at least one group Z.

2. A method according to claim 1 wherein Z is a group -R²-(OCₚH₂ₚ)_{q}(OCᵣH₂ᵣ)-R³.

3. A method according to claim 2 wherein p and/or r are independently 2, 3 or 4.

4. A method according to claim 2 or 3 wherein q and s are each independently integers from 10 to 30.

5. A method according to claim 4 wherein q and s are each independently 15 to 25.

6. A method according to any one of claims 2 to 5 wherein p is 2, r is 3, and q and s are both 18.

7. A method according to any preceding claim wherein R² is a methylene, ethylene, propylene, butylene, pentylene or hexylene group.

8. A method according to any preceding claim wherein R³ is a hydrogen atom or a hydroxyl group.

9. A method according to any preceding claim wherein the siloxane is linear.

10. A method according to any preceding claim wherein the siloxane contains branching.

11. A method according to any preceding claim wherein Z is a group -R²-(OCₚH₂ₚ)_{q}(OCᵣH₂ᵣ)ₛ-R³, and R³ is a hydroxyl or alkanoyloxy group.

12. A method according to any preceding claim wherein 2 to 20 mole percent of silicon atoms in the siloxane molecule are substituted by a group Z.

13. A method according to claim 12 wherein 5 to 16 mole percent of silicon atoms in the siloxane molecule are substituted by a group Z.

14. A method according to any preceding claim wherein the siloxane has a hydrophilic/lipophilic balance (HLB)in the range of 5.0 to 7.3.

15. A method according to any preceding claim wherein the siloxane has a molecular weight in the range of 1,000 to 500,000.

16. A method according to claim 15 wherein the siloxane has a molecular weight in the range of 10,000 to 100,000.

17. A method according to any preceding claim wherein the siloxane is a hydroxy-endcapped linear polydimethylsiloxane having an HLB of 5.9 to 6.3, in which 10 to 12 mole percent of silicon atoms are substituted by Z groups of the formula -R²-(OCₚH₂ₚ)_{q}(OCᵣH₂ᵣ)ₛ-R³, in which p is 2, r is 3 and q and s are both 18, R² is an alkylene group having from 1 to 6 carbon atoms or a direct bond, and R³ is a hydrogen atom or a hydroxyl, ester or ether group.

18. A method according to any preceding claim wherein the additive further comprises one or more components selected from a polydimethylsiloxane, an organic polyether, and a fatty acid.

19. A method according to claim 18 wherein the additive further comprises an organic polyether of the formula R⁴-(OCₚH₂ₚ)_{q}(OCᵣH₂ᵣ)ₛ-R⁵ in which R⁴ and R⁵ are selected from a hydrogen atom, hydroxyl, alkyl and alkoxy groups, p and r are independently an integer from 1 to 6, and q and s are independently 0 or an integer such that 1 ≤ q + s ≥ 400.

20. A method according to claim 18 or 19 wherein the additive further comprises a fatty acid which is a saturated or unsaturated monobasic aliphatic carboxylic acid.

21. A method according to claim 20 wherein the carboxylic acid is selected from lauric, myristic, palmitic, stearic, arachidic, behenic, lignoceric, palmitolic, oleic, linoleic, linolenic, and arachidonic acids.

22. A method according to any preceding claim wherein the additive is an emulsion.

23. A method according to claim 22 wherein the additive is a gum based self-emulsifying siloxane.

24. A method according to any preceding claim wherein the additive is added to the paper in an amount within the range 0.1 to 1 wt% of the paper.

25. A method according to claim 24 wherein the additive is added to the paper in an amount within the range 0.1 to 0.5 wt% of the paper.

26. A method according to any preceding claim which is performed at substantially neutral pH.

27. A method according to any preceding claim wherein the additive is added to the paper before, during or after pulping.

## Patentansprüche

1. Verfahren zum Entfärben von bedrucktem Papier, das Verfahren umfaßt Aufschließen des Papiers, um einen wässerigen Brei zu bilden, Zugeben eines Entfärbungszusatzmittels zu dem Papier und Enfernen von abgelöster Tinte durch Flotation, bei dem das Zusatzmittel ein organo-modifiziertes Siloxan aufweist, das Einheiten der folgenden Formel umfaßt:
[R¹ ₐZ_{b}SiO_{(4-a-b/2)}]ₙ
in der jedes R¹ unabhängig aus einem Wasserstoffatom, einer Alkyl-, Aryl-, Alkenyl-, Aralkyl-, Alkaryl-, Alkoxy-, Alkanoyloxy-, Hydroxyl- Ester- oder Ethergruppe ausgewählt wird;
jedes Z unabhängig aus einer Alkylgruppe; die mit einer Amin-, Amid-, Carboxyl-, Ester- oder Epoxygruppe oder einer -R²-(OCₚH₂ₚ)_{q}(OCᵣH₂ᵣ)ₛ-R³-Gruppe substituiert ist, ausgewählt wird;
n ist eine ganze Zahl größer als 1;
a und b sind unabhängig 0, 1, 2 oder 3;
R² ist eine Alkylengruppe oder eine direkte Bindung;
R³ ist eine Gruppe, wie oben für R¹ oder Z definiert ist;
p und r sind unabhängig eine ganze Zahl von 1 bis 6;
q und s sind unabhängig 0 oder eine ganze Zahl, so daß 1 ≤q+s ≥ 400;
und wobei jedes Molekül des organo-modifizierten Siloxans wenigstens eine Gruppe Z enthält.

2. Verfahren nach Anspruch 1, bei dem Z eine -R²-(OCₚH₂ₚ)_{q}(OCᵣH₂ᵣ)ₛ-R³-Gruppe ist.

3. Verfahren nach Anspruch 2, bei dem p und/oder r unabhängig 2, 3 oder 4 sind.

4. Verfahren nach Anspruch 2 oder 3, bei dem q und s jeweils unabhängig ganze Zahlen:von 10 bis 30 sind.

5. Verfahren nach Anspruch 4, bei dem dem q und s jeweils unabhängig ganze Zahlen von 15 bis 25 sind.

6. Verfahren nach einem der Ansprüche 2 bis 5, bei dem p gleich 2 ist, r gleich 3 ist, und q und s beide 18 sind.

7. Verfahren nach einem der vorherigen Ansprüche, bei dem R² eine Methylen-, Ethylen-, Propylen-, Butylen-, Pentylen- oder Hexylengruppe ist.

8. Verfahren nach einem der vorherigen Ansprüche, bei dem R³ eine Wasserstoffatom oder eine Hydroxylgruppe ist.

9. Verfahren nach einen der vorherigen Ansprüche, bei dem das Siloxan linear ist.

10. Verfahren nach einem der vorherigen Ansprüche, bei dem das Siloxan Verzweigungen enthält.

11. Verfahren nach einem der vorherigen Ansprüche, bei dem Z eine -R²-(OCₚH₂ₚ)_{q}(OCᵣH₂ᵣ)ₛ-R³-Gruppe ist und R³ ist eine Hydroxyl- oder Alkanoyloxygruppe.

12. Verfahren nach einem der vorherigen Ansprüche, bei dem 2 bis 20 Molprozent der Siliconatome in dem Siloxanmolekül mit einer Z-Gruppe substituiert sind.

13. Verfahren nach Anspruch 12, bei dem 5 bis 16 Molprozent der Siliconatome in dem Siloxanmolekül mit einer Z-Gruppe substituiert sind.

14. Verfahren nach einem der vorherigen Ansprüche, bei dem das Siloxan eine hydrophile/lipophile Balance (HLB) im Bereich von 5,0 bis 7,3 hat.

15. Verfahren nach einem der vorherigen Ansprüche, bei dem das Siloxan ein Molekulargewicht im Bereich von 1.000 bis 500.000 hat.

16. Verfahren nach Anspruch 15, bei dem das Siloxan ein Molekulargewicht im Bereich von 10.000 bis 100.000 hat.

17. Verfahren nach einem der vorherigen Ansprüche, bei dem das Siloxan ein hydroxyendverkapseltes lineares Polydimethylsiloxan mit einem HLB von 5,9 bis 6,3 ist, bei dem 10 bis 12 Molprozent Siliconatome mit Z-Gruppen der Formel -R²-(OCₚH₂ₚ)_{q}(OCᵣH₂ᵣ)ₛ-R³- substituiert sind, in der p gleich 2 ist, r gleich 3 ist und q und s sind beide 18, R² ist eine Alkylengruppe mit 1 bis 6 Kohlenstoffatomen oder eine direkte Bindung, und R³ ist ein Wasserstoffatom oder eine Hydroxyl-, Ester- oder Ethergruppe.

18. Verfahren nach einem der vorherigen Ansprüche, bei dem das Zusatzmittel des weiteren eine oder mehrere Komponenten, ausgewählt aus Polydimethylsiloxan, einem organischen Polyether und einer Fettsäure, aufweist.

19. Verfahren nach Anspruch 18, beidem das Zusatzmittel einen organischen Polyether der Formel -R⁴-(OCₚH₂ₚ)_{q}(OCᵣH₂ᵣ)ₛ-R⁵- aufweist, in der R⁴ und R⁵ ausgewählt werden aus einem Wasserstoffatom, Hydroxyl-, Alkyl- und Alkoxylgruppen, p und r sind unabhängig eine ganze Zahl von 1 bis 6, und q und s sind unabhängig 0 oder eine ganze Zahl, so daß 1 ≤ q+s ≥ 400 ist.

20. Verfahren nach Anspruch 18 oder 19, bei dem das Zusatzmittel des weiteren eine Fettsäure aufweist, die eine gesättigte oder ungesättigte einwertige aliphatische Carbonsäure ist.

21. Verfahren nach Anspruch 20, bei dem die Carbonsäure ausgewählt wird aus Laurinsäure, Myristinsäure, Palmitinsäure, Stearinsäure, Arachinsäure, Behensäure, Lignocerinsäure, Palmitoleinsäure, Oleinsäure, Linolsäure, Linolensäure und Arachidonsäure.

22. Verfahren nach einem der vorherigen Ansprüche, bei dem das Zusatzmittel eine Emulsion ist.

23. Verfahren nach Anspruch 22, bei dem das Zusatzmittel ein gummibasierendes selbstemulgierendes Siloxan ist.

24. Verfahren nach einem der vorherigen Ansprüche, bei dem das Zusatzmittel zu dem Papier in einer Menge:zugegeben wird, die im Bereich von 0,1 bis 1 Gew.-% des Papiers liegt.

25. Verfahren nach Anspruch 24, bei dem das Zusatzmittel zu dem Papier in einer Menge zugegeben wird, die im Bereich von 0,1 bis 0,5 Gew.-% des Papiers liegt.

26. Verfahren nach einem der vorherigen Ansprüche, das im wesentlichen bei einem neutralen pH-Wert durchgeführt wird.

27. Verfahren nach einem der vorherigen Ansprüche, bei dem das Zusatzmittel dem Papier vor, während oder nach dem Aufschließen zugegeben wird.

## Revendications

1. Procédé de désencrage de papier imprimé, le procédé comprenant la réduction en pâte du papier pour former une bouillie aqueuse, l'addition d'un additif de désencrage au papier et l'élimination de l'encre détachée par flottation, dans lequel l'additif comprend un siloxane organo-modifié comprenant des unités de la formule :
[R¹ ₐZ_{b}SiO_{(4-a-b)/2}]ₙ
dans laquelle :
- les R¹ sont chacun choisis indépendamment parmi un atome d'hydrogène, un groupe alkyle, aryle, alcényle, aralkyle, alkaryle,: alcoxy, alcanoyloxy, hydroxyle, ester ou éther ;
- les Z sont chacun choisis indépendamment parmi un groupe alkyle substitué par un groupe amine, amide, carboxyle, ester ou époxy, ou un groupe -R²-(OCₚH₂ₚ)_{q} (OCᵣH₂ᵣ)ₛ-R³ ;
- n est un entier supérieur à 1 ;
- a et b sont indépendamment 0, 1, 2 ou 3 ;
- R² est un groupe alkylène ou une liaison directe ;
- R³ est un groupe tel que défini pour R¹ ou Z ci-dessus ;
- p et r sont indépendamment un entier de 1 à 6 ;
- q et s sont indépendamment 0 ou un entier tel que 1 ≤ q + s ≥ 400 ;
et dans laquelle chaque molécule du siloxane organo-modifié contient au moins un groupe Z.

2. Procédé selon la revendication 1, dans lequel Z est un groupe -R²-(OCₚH₂ₚ)_{q}(OCᵣH₂ᵣ)ₛ-R³.

3. Procédé selon la revendication 2, dans lequel p et/ou r sont indépendamment 2, 3 ou 4.

4. Procédé selon l'une des revendications 2 ou 3, dans lequel q et s sont chacun indépendamment des entiers de 10 à 30.

5. Procédé selon la revendication 4, dans lequel q et s sont chacun indépendamment 15 à 25.

6. Procédé: selon l'une quelconque des revendications 2 à 5, dans lequel p est 2, r est 3, et q et s sont tous deux 18.

7. Procédé: selon l'une quelconque des revendications précédentes, dans lequel R² est un groupe méthylène, éthylène, propylène, butylène, pentylène ou hexylène.

8. Procédé: selon l'une quelconque des revendications précédentes, dans lequel R³ est un atome d'hydrogène ou un groupe hydroxyle.

9. Procédé selon l'une quelconque des revendications précédentes, dans lequel le siloxane est linéaire.

10. Procédé selon l'une quelconque des revendications précédentes, dans lequel le siloxane contient une ramification.

11. Procédé selon l'une quelconque des revendications précédentes, dans lequel Z est un groupe -R²-(OCₚH₂ₚ)_{q}(OCᵣH₂ᵣ)ₛ-R³, et R³ est un groupe hydroxyle ou alcanoyloxy.

12. Procédé selon l'une quelconque des revendications précédentes, dans lequel 2 à 20 pour cent en moles d'atomes de silicium dans la :molécule de siloxane sont substitués par un groupe Z.

13. Procédé selon la revendication 12, dans lequel 5 à 16 pour cent en moles d'atomes de silicium dans la molécule de siloxane sont substitués par un groupe Z.

14. Procédé selon l'une quelconque des revendications précédentes, dans lequel le siloxane a un équilibre hydrophile/lipophile (HLB - hydrophilic/lipophilic balance) se situant dans la plage de 5,0 à 7,3.

15. Procédé selon l'une quelconque des revendications précédentes, dans lequel le siloxane a une masse moléculaire se situant dans la plage de 1000 à 500 000.

16. Procédé :selon la revendication 15, dans lequel le siloxane a une masse moléculaire se situant dans la plage de 10 000 à 100 000.

17. Procédé selon l'une quelconque des revendications précédentes, dans lequel le siloxane est un polydiméthylsiloxane linéaire coiffé aux extrémités par hydroxy, ayant un HLB de 5,9 à 6, 3, dans lequel 10 à 12 pour cent en moles d'atomes de silicium sont substitués par des groupes Z de la formule -R²-(OCₚH₂ₚ)_{q}(OCᵣH₂ᵣ)ₛ-R³, dans laquelle p est 2, r est 3 et q et s sont tous deux 18, R² est un groupe alkylène ayant de 1 à 6 atomes de carbone ou une liaison :directe, et R³ est un atome d'hydrogène ou un groupe hydroxyle, ester ou éther.

18. Procédé selon l'une quelconque des revendications précédentes, dans lequel l'additif comprend en outre un ou plusieurs composants choisis par un polydiméthylsiloxane, un polyéther organique et :un acide gras.

19. Procédé selon la revendication 18, dans lequel l'additif comprend en outre un polyéther organique de la formule R⁴-(OCₚH₂ₚ)_{q}(OCᵣH₂ᵣ)ₛ-R⁵ dans laquelle R⁴ et R⁵ sont choisis parmi un atome d'hydrogène, les groupes hydroxyle, alkyle et alcoxy, p et r sont indépendamment un entier de 1 à 6, et q et s sont indépendamment 0 ou un entier tel que 1 ≤q + s ≥400.

20. Procédé selon l'une des revendications 18 ou 19, dans lequel l'additif comprend en outre un acide gras qui est un acide carboxylique aliphatique monobasique saturé ou insaturé.

21. Procédé selon la revendication 20, dans lequel l'acide carboxylique est choisi parmi les acides laurique, myristique, palmitique, stéarique, arachidique, béhénique, lignocérique, palmitolique, oléique, linoléique, linolénique et arachidonique.

22. Procédé selon l'une quelconque des revendications précédentes, dans lequel l'additif est une émulsion.

23. Procédé selon la revendication 22, dans lequel l'additif est un siloxane auto-émulsifiant à base de gomme.

24. Procédé selon l'une quelconque des revendications précédentes, dans lequel l'additif est ajouté au papier dans une quantité se situant dans la plage de 0,1 à 1% en poids du papier.

25. Procédé :selon la revendication 24, dans lequel l'additif est ajouté au papier dans une quantité se situant dans la plage de 0,1 à 0,5% en poids du papier.

26. Procédé selon l'une quelconque des revendications précédentes qui est effectué à pH sensiblement neutre.

27. Procédé selon l'une quelconque des revendications précédentes, dans lequel l'additif est ajouté au papier avant, pendant ou après la réduction en pâte.
